(19) Europäisches Patentamt / European Patent Office / Office européen des brevets

(11) **EP 3 588 845 B1**

(12) **EUROPEAN PATENT SPECIFICATION**

(45) Date of publication and mention
of the grant of the patent:
**07.06.2023 Bulletin 2023/23**

(21) Application number: **19181653.7**

(22) Date of filing: **21.06.2019**

(51) International Patent Classification (IPC):
**H04L 12/10** *(2006.01)*

(52) Cooperative Patent Classification (CPC):
**H04L 12/10**

(54) **METHOD AND DEVICE FOR CONTROLLING ACTIVATION OF A TERMINAL**

VERFAHREN UND VORRICHTUNG ZUR STEUERUNG DER AKTIVIERUNG EINES ENDGERÄTS

PROCÉDÉ ET DISPOSITIF DE COMMANDE D'ACTIVATION DE TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2018 GB 201810487**

(43) Date of publication of application:
**01.01.2020 Bulletin 2020/01**

(73) Proprietor: **CANON KABUSHIKI KAISHA**
**Ohta-ku**
**Tokyo 146-8501 (JP)**

(72) Inventors:
• **LAGRANGE, Pascal**
**35520 LA CHAPELLE DES FOUGERETZ (FR)**
• **ROUSSEAU, Pascal**
**35000 RENNES (FR)**

(74) Representative: **Santarelli**
**Tour Trinity**
**1 bis Esplanade de la Défense**
**92035 Paris La Défense Cedex (FR)**

(56) References cited:
AU-A1- 2014 202 838     US-A1- 2007 136 614
US-A1- 2015 042 243     US-A1- 2015 312 048

**Description**

FIELD OF THE INVENTION

The present invention relates to a power over cable system. More specifically, the present invention relates to a method of controlling activation of a terminal connected to a power source according to a linear bus topology.

BACKGROUND OF THE INVENTION

In power over cable systems, such as Power over Ethernet (PoE) and Power over Coax (PoC), one or more devices are powered over network cables by a power sourcing equipment.

The power sourcing equipment (PSE) is a device such as a network switch that provides (sources) power on the network cable. A powered device (PD) refers to an apparatus powered by the PSE and thus consuming energy. Examples of powered devices include analog cameras, IP cameras including pan-tilt-zoom (PTZ) cameras, wireless access points (AP), and VoIP phones.

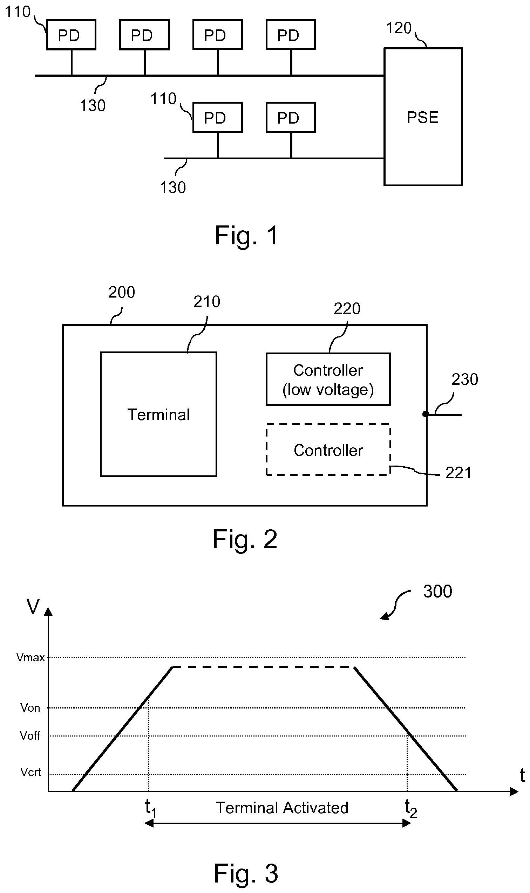

**Figure 1** is an illustration of a power over cable system comprising a PSE 120, a plurality of PDs 110 and two network cables 130. Each network cable 130 connecting, according to a linear bus topology, a plurality of PDs 110 to one port of the PSE 120. Each network cable and its associated PDs forming a network segment.

Power over cable technology removes the requirement for separate data cables and power supplies which would otherwise be needed to power the devices. This allows for more time and cost efficient installation for installers. However, power distribution over data cables suffers from limitations on the total power that can be carried, and from a significant power loss in the cables due to the relatively low carried voltage (e.g. a typical voltage being comprised between 48 and 56 V). In fact, the total power consumption on one network segment is the accumulation of the power consumption of each device and the power dissipated in the cable due to the resistivity of the cable (Joule effect).

Typically, each port of the PSE is current-limited by a protection circuit that limits the distributed power to prevent damages in the cable and devices connected thereto. As an example, the PSE supplies a voltage-stabilized power supply of 56 V, and the protection circuits limit the power at each port to 50 W (watts). When the current at one port exceeds the authorized current, the corresponding protection circuit cuts the power on the considered port, shutting down the power supply to all devices coupled thereto.

As the configuration of the power over cable system is not predictable, that is to say, how many devices are coupled to each port of the PSE and what are their actual power consumptions at a given time instant, it is difficult to know in advance the total power consumption that will be drawn on the port so as to prevent a power failure at the network start-up or during a hot-plug of one or several devices (i.e. adding one or more devices while the system is operating).

In the case where a PSE port is shutdown, all the devices linked to that port are powered off and then powered up again as the port restarts. However, the port will be shutdown again if power overrun conditions are still met for the port after reboot of the devices. An endless loop of shutdowns and reboots may thus occur, until one or more devices linked to the port are unplugged.

Moreover, in case the system installation has changed while a PSE port was shut down - such as the addition of one or more devices to one port - the system installer may experience unpredictable system reboot, i.e. devices previously operational may no longer be, after the reboot.

It may therefore be desired to prevent the system from entering such an unpredictable boot - that is to say, prevent an endless loop of shutdowns and reboots in case of a power overrun at the port level.

In addition, it may be desired to prevent an unexpected reboot sequence, e.g. a situation in which devices previously operational can no longer activate upon PSE port reboot because not enough power is available for them after reboot.

It is known from US 2015/042243 a PoE control system where the PSE device includes a PoE controller configured to provide a power setting command as a function (e.g. percentage) of the nominal power level to the PoE signal receiver via the voltage signal, such that the PD can operate at a power level that is based on the power setting command.

It is also known from AU2014202838 a PD having two RJ45 plugs and a controller which organizes the data and power flow between the two plugs. The configuration of the PD allows both power and data to pass through the device such that a second PD can be operatively connected in series or daisy chained. A delay function is provided in the PD to control powering of the second RJ45 plug and thus of the downstream PD, so that when the devices are installed on site and there is a cycling of power, the devices do not all turn on at the same time but rather turn on one after the other in sequence with the pre-determined delay.

SUMMARY OF THE INVENTION

The present invention is defined in the appended independent claims to which reference should be made. Advantageous features are set out in the appended dependent claims.

BRIEF DESCRIPTION OF THE DRAWINGS

Other particularities and advantages of the invention will also emerge from the following description, illustrated by the accompanying drawings, in which:

**Figure 1,** previously described, illustrates a power over cable system comprising a PSE and a plurality of PDs;

**Figure 2** schematically shows a powered device arrangement that is adapted to embed embodiments of the invention;

**Figure 3** illustrates typical activation and deactivation thresholds for the terminal and a low voltage controller;

**Figure 4** is a flowchart illustrating operation of the low voltage controller according to embodiments of the invention;

**Figures 5a** to **5e** depict several exemplary embodiments of controlling the start-up time of a powered device;

**Figure 6** shows the division into intervals of the range of voltages [Von, Vmax] capable of activating the terminal;

**Figures 7a, 7b** and **7c** represent different exemplary arrangements of the powered device;

**Figure 8a** is a functional block diagram illustrating an implementation example of a powered device comprising an adapter unit and a camera unit;

**Figure 8b** illustrates a functional block diagram of a sensing unit configured to implement a cable resistance calculation method;

**Figure 9** is a flowchart of a method of predicting a voltage drop that would occur as a result of activating a terminal; and

**Figure 10** illustrates a group of messages that may be exchanged within a powered device, according to an embodiment.

Note that same references are used across different figures when designating same elements.

DETAILED DESCRIPTION OF EMBODIMENTS OF THE INVENTION

**Figure 2** schematically shows a powered device 200 arrangement that is adapted to embed embodiments of the invention.

The powered device comprises a terminal 210 and a (low voltage) controller 220.

The terminal 210 represents the core unit of the powered device providing the main functions of the device. The terminal 210 is for example a camera unit in charge of capturing a scene and transmitting data content-e.g. video stream(s) - over the network to a destination device which may be another device of the network or a remote device connected to the network. More generally, the terminal may be a communication unit configured to send and/or receive data over/from the network and drawing its power over the cable from a PSE.

A sufficient electric power needs to be drawn from the cable in order to run properly the functions of the terminal. For that purpose, the controller 220 is in charge of controlling the startup of the terminal 210 depending on the power available over the cable. The controller 220 is thus configured to at least determine if and when the terminal 210 can be activated.

The controller 220 operates at low power conditions (low voltage) compared to the consumption of the terminal. This means that a low voltage, e.g. 5 volts, is sufficient to activate the controller, while the terminal requires a higher voltage, e.g. 40 volts, to activate. Consequently, the controller 220 is started up first and is in charge of executing basic start-up control functions requiring only a limited power amount from the network.

Optionally, the powered device 200 may embed another controller 221 capable of drawing more power (e.g. operating at nominal or intermediate voltage values 36 - 48 V) if more advanced control functions are needed.

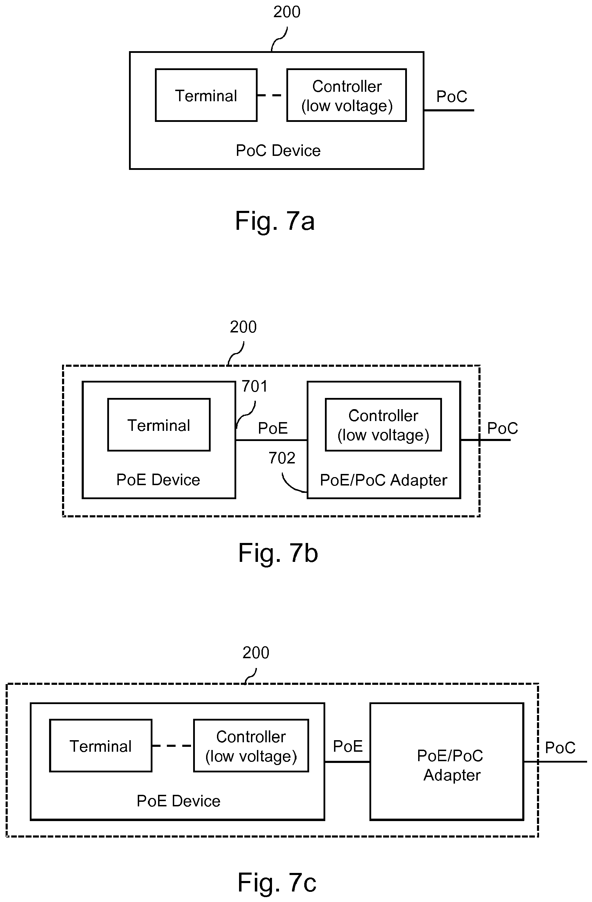

In the figure, the powered device is represented as a single device comprising the terminal and the one or more controllers. This is for illustration only. The powered device 200 may be physically formed by two or more interconnected devices embedding the terminal and the one or more controllers. For example, one device may contain the terminal 210 and another one the controller 220 (cf. arrangements depicted in **Figures 7a** to **7c**).

Also, it is assumed that the voltage supplied at the input 230 of the powered device 200 from the cable (referred to as Vin) is the same as the voltage that can be supplied to the terminal 210 (no voltage drop due to controllers consumption).

**Figure 3** illustrates typical activation and deactivation thresholds for the terminal and the (low voltage) controller and shows an example of hysteresis effect when powering on and off a terminal.

Illustration is performed over a graph 300 showing a variation of the voltage V at the input of the device 200 over time. Note that the linear progression of the voltage is for illustration purpose only. Actual voltage at the input of the device may vary according to different patterns and may also fluctuate although the PSE delivers a stabilized voltage.

Von is the voltage above which the terminal is allowed to activate and to draw power from the cable. Voff is the voltage below which the terminal should deactivate and is no longer allowed to draw power from the cable. Von and Voff are chosen in respective ranges [Von_min, Von_max] and [Voff_min, Voff_max] of possible values, with the requirement that Voff < Von. Vmax is the maximum input voltage allowed for the powered device.

Von, Voff and Vmax are dependent on the device specification. Typically, Von_max = 48 V; Von_min = 32 V; Voff_max = 39 V; Voff_min = 30 V; and Vmax= 56 V. Voff is typically few volts (e.g. 5 - 6 V) below Von to create an hysteresis effect between the activation and the deactivation of the terminal and to provide more stability in the operation of the terminal.

The controller may thus activate the terminal at $t_1$ (a time instant at which Vin $\geq$ Von) and deactivate the terminal at $t_2$ (a time instant at which Vin < Voff, i.e. when the input voltage drops below Voff). The active or operational period of the terminal is thus defined between times $t_1$ and $t_2$. Outside this period, power consumption of the device is limited to avoid drawing excess current to compensate for the low voltage at the input of the device. The limited power consumption is defined as a standby power and is for example between 2 and 4 W.

In the present disclosure, activating the terminal means turning on the terminal, starting up the terminal, or performing any action that causes the main functions of the terminal to be executed. Whenever mention is made in the present disclosure to other expressions than terminal activation, such as terminal startup, this is meant for exemplification only without limiting the scope of the disclosure. Similarly, deactivating the terminal means turning off the terminal, putting the terminal in standby mode, or performing any action that causes stopping the execution of the main functions of the terminal.

Vert is the voltage above which the low voltage controller is started up and becomes operational. Vert is below Voff as the controller should be capable of controlling the terminal over all the operational period $[t_1, t_2]$.

The activation/deactivation of the terminal by the controller may be performed by powering/shutting off the terminal or by any other means such as specific signals or commands.

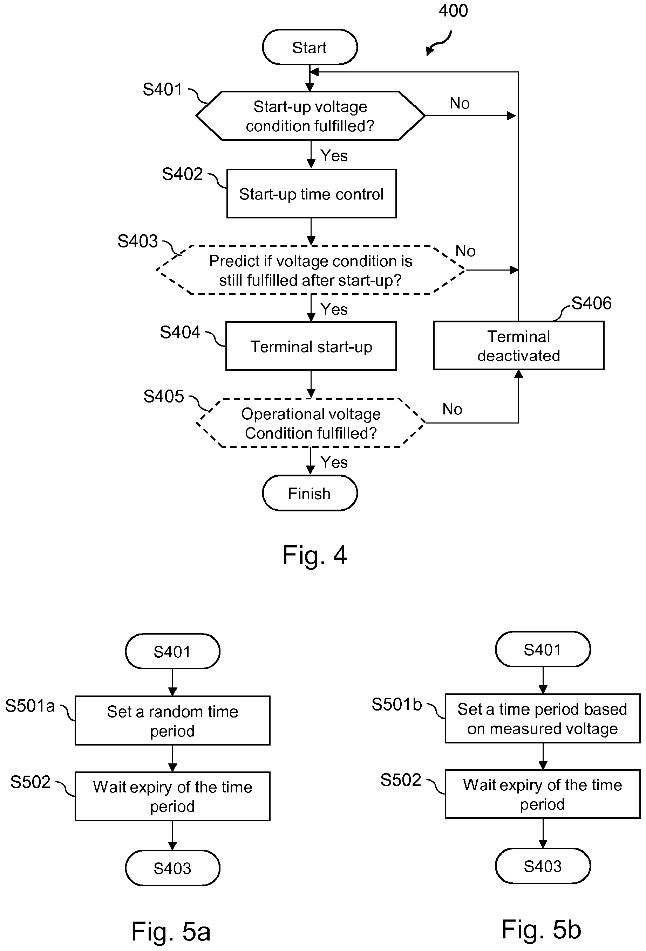

**Figure 4** is a flowchart illustrating operation of the low voltage controller according to embodiments of the invention.

The flowchart 400 may be automatically executed following the start-up of the controller 220, i.e. after the voltage at the input of the device reaches the operating voltage Vcrt of the controller. In a variant, execution of flowchart 400 is launched under a specific condition after the controller is started-up, e.g. the reception of an activation signal, triggered by a user input for example.

At step S401 of the flowchart, the controller checks whether the voltage condition for starting up the terminal is fulfilled or not. This is a necessary condition for activating the terminal.

In one implementation, the checking comprises comparing the voltage Vin at the input 230 of the device with the threshold value Von. If Vin is lower than Von, the voltage available at the input of the device is not sufficient to start-up the terminal. The terminal is thus not started up, and step S401 may be re-executed at other times for checking if the start-up voltage condition is eventually fulfilled.

In another implementation, the checking comprises comparing a filtered value of input voltages taken at different times, e.g. by averaging the voltage Vin over a predetermined interval, instead of considering an instant value of Vin. The filtering allows reducing the impact of cable voltage fluctuations on the comparing.

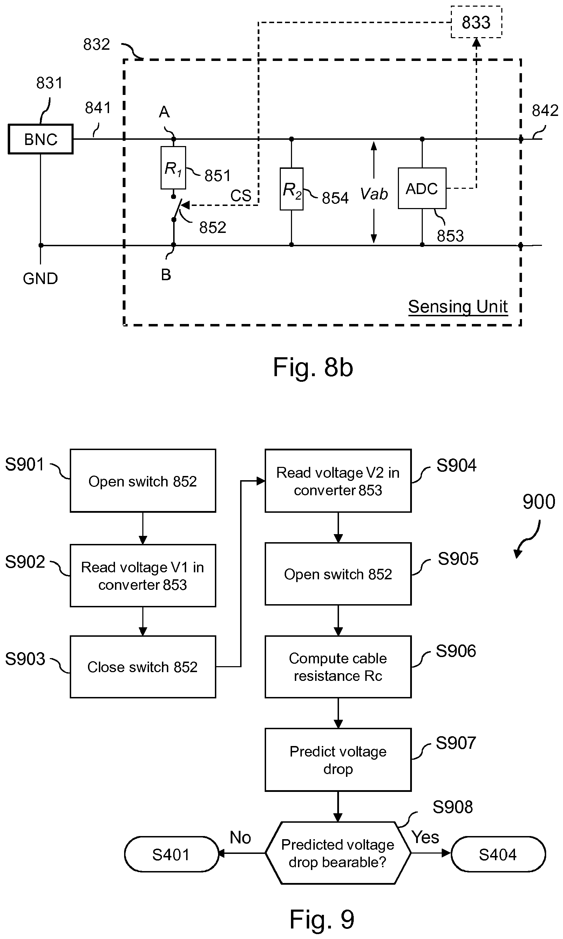

The voltage Vin may be obtained by measurement, calculation or any other means. The input voltage Vin may be for example measured by a voltage measurement circuit as depicted in **Figure 8b.**

If the voltage condition for starting up the terminal is fulfilled, e.g. if Vin is greater than or equal to Von, the controller proceeds to step S402 of the flowchart.

At step S402, the timing of activating the terminal is controlled. Aim of this control is to prevent different terminals from starting up (and hence drawing power) substantially at the same time, as it may cause an unexpected behaviour of the system. In fact, and particularly when the PSE is turned on, all devices get powered and have their voltage condition fulfilled substantially at the same time.

**Figures 5a** to **5e** depict several exemplary embodiments of controlling the start-up time of step S402. Similar steps in these exemplary embodiments have same references.

In **Figure 5a**, a random time period is set by the controller (S501a) and then the controller waits for that time period to expire (S502) before proceeding to the following steps. This creates statistical disparity in the starting times of the different terminals of the network and prevents a terminal from starting up if not enough power remains after other terminals have first started up.

In **Figure 5b**, a time period is set by the controller based on voltage Vin (S501b) and then the controller waits for that time period to expire (S502) before proceeding to the following steps. Benefit is taken from the fact that the voltage Vin at the input of each device is different due to the resistive nature of the network, and the waiting time periods derived from these voltages are thus also different. For example, the time periods can be determined based on the corresponding voltages by means of a strictly monotonic (one-to-one) function. The function can also be chosen to be highly discriminative so that a small voltage difference may lead to a significant time period difference.

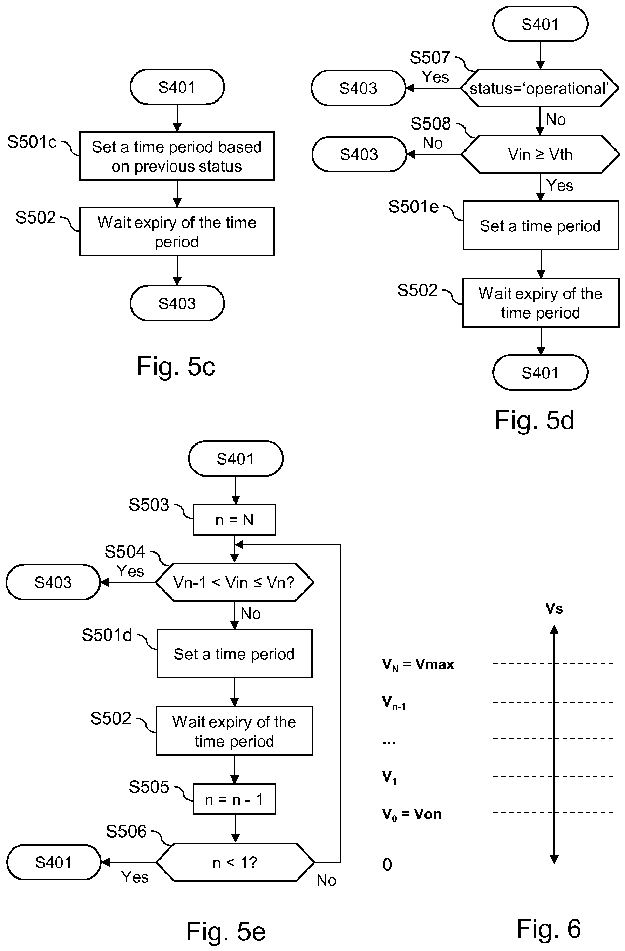

In **Figure 5c**, a time period is set by the controller based on previous status of the terminal (S501c) and then the controller waits for that time period to expire (S502) before proceeding to the following steps. For example, priority is given to a terminal that was already up and operational (for any or a predetermined period of time) prior the terminal shut down, (status='operational'), relatively to a terminal that was not operational, such as a terminal newly inserted in the network (status='new'). Thus, in case not enough power can be delivered by the PSE to all PDs as a result of the insertion of a new powered device, the newly added powered device will be kept deactivated at the system reboot.

In one implementation, the time period, when the previous status was 'operational', is set shorter than the time period for the case when the previous status was 'new' to give priority to previously operational devices.

According to another exemplary embodiment, terminals with status = 'operational' are started up as soon as the voltage condition S401 is fulfilled (e.g. Vin $\geq$ Von), while terminals with status = 'new' should have an input voltage greater than a certain voltage threshold Vth (where Von < Vth < Vmax) to activate. Thus, if the input voltage is low (Vin < Vth), previously up and running terminals are started up while newly added terminals are not. Note that an equivalent implementation is to set two distinct Von values, Von1 and Von2, where Von_min ≤ Von1 < Von2 ≤ Von_max, for terminals with status = 'operational' and with status = 'new', respectively. The start-up voltage condition is then checked against the corresponding Von1 or Von2 thresholds at step S401. Von1 being lower, previously operational terminals are given higher priority.

**Figure 5d** illustrates another exemplary embodiment in which priority is given to terminals previously operational. At step S507, the status of the terminal is checked. If the status='operational', following steps of the flowchart of **Figure 4** are executed, such as step S403 or step S404. If the status in not 'operational' (i.e. 'new'), the input voltage Vin is further compared to voltage threshold Vth (Von < Vth < Vmax). If Vin is lower than Vth, priority is given to the terminal and following steps are executed, e.g. step S403 or step S404. If the input voltage Vin is not greater than Vth, the terminal is not allowed to startup. A time period is set (S501e), and the expiry of the time period is waited before re-executing step S401 to check if the voltage condition has evolved.

**Figure 5e** illustrates yet another exemplary embodiment in which a time period is set by the controller based on the voltage Vin.

Contrary to the embodiment of **Figure 5b** in which the dependence between the delay and the voltage is continuous, the embodiment of **Figure 5e** represents a variant in which the dependence is discrete. The range [Von, Vmax] is divided into N intervals [Vn-1, Vn]; where $1 \leq n \leq N$, $V_0$ = Von and $V_N$ = Vmax as illustrated in **Figure 6**. The idea is that powered devices having an input voltage Vin in a higher voltage interval are given higher priority and started earlier.

At step S503, variable n is initialized to N. At step S504, it is determined whether the input voltage Vin belongs to current interval [Vn-1, Vn]. If the determination is positive, the process proceeds with the following steps of the flowchart of **Figure 4** (e.g. connecting to step S403) for activating the terminal. If the determination is negative, a waiting time period is set at step S501d, and then the controller waits for that time period to expire (S502) before proceeding to the following steps of the iteration.

In one implementation, the time period set at step S501d is a predetermined time period. Thus, all powered devices with an input voltage Vin belonging to current interval will set a same time period and will activate substantially at the same time. Note that this may not be an issue as the number of devices sharing a same interval is likely to be small. In other implementations, disparity in the starting times is created between devices sharing a same voltage interval; for example by implementing one of the steps S501a, S501b and S501c instead of S501d.

At step S505 the variable n is decremented by 1. A test is performed at step S506 to check if the last interval [$V_0$, $V_1$] has already been processed (i.e. whether n < 1). If the last interval has not yet been processed, step S504 is re-executed in a new iteration. If the last interval has been processed, this indicates that the voltage Vin has not been found in the interval [Von, Vmax] which may be due to a change of the voltage Vin since the test S401 has been performed (e.g. other devices have started up which may have led to a decrease of the voltage Vin at the input of the device). In this case the process may proceed to step S401 again to check the fulfilment of the start-up voltage condition.

In the above described embodiments, the delay time period may be counted by each device from when the voltage at the input exceeds the activation threshold Von. This gives substantially a same origin for counting the waiting time periods in steps S502 of the embodiments of **Figures 5a - 5e.** Of course many variants may be considered for defining a common time reference, such as a reference signal broadcast over the network. Still, having a common time reference is not essential as different origins may be considered to be equivalent to adding a variable initial period to a same "virtual" common origin between all the devices, which increases disparity in the waiting time periods between the different devices.

All above exemplary embodiments allow for a distributed control of the start-up of terminals, i.e. without the necessity for the devices of the network to coordinate with each other or the need for a synchronization protocol or the like. This makes the installation of devices (e.g. addition and/or removal of new devices) particularly easy.

Back to the description of **Figure 4,** after step S402, the controller optionally checks at step S403 whether the voltage condition would still be fulfilled once the terminal is started-up. In fact, a voltage drop may occur at the input of the powered device resulting from the terminal drawing power after starting up, and this step aims to predict the amount of that voltage drop and determine whether the fulfilment of the voltage condition is changed or not. An implementation of a method of predicting the voltage drop is described with reference to **Figure 9.** If the prediction at step S403 indicates that the voltage condition would still be fulfilled, the controller proceeds with the execution of the following step S404 of activating the terminal; otherwise the controller may re-execute the whole flowchart starting from step S401, or (in a non-illustrated variant) step S403 is re-executed at other times for checking if the condition is eventually fulfilled. Advantage of executing step S403 is to avoid an activation/deactivation cycle for the terminal if not enough power is available to sustain the operation of the terminal.

Note that the step S403 of checking whether the voltage condition is still fulfilled is not necessarily performed after step S402, but may be performed, in a non-illustrated variant, before step S402. In this variant, if it is predicted that the voltage condition would still be fulfilled, then step S402 is executed; otherwise the controller may also re-execute the whole flowchart starting from step S401.

At step S404, the terminal is started-up. The starting up may be performed by sending an activation signal to the terminal. It may also simply consist in powering the terminal.

Optionally, the controller checks at step S405 whether an operational voltage condition is fulfilled or not. This step is meant to check if the voltage at the input of the device Vin has not dropped below Voff after the terminal has started-up. Although this step is particularly relevant if step S403 has not been implemented, the checking at step S405 remains advantageous even if step S403 has been implemented as it allows confirming that the actual operational voltage is sufficient.

If the operational voltage condition is not fulfilled, i.e. Vin is lower than or equal to Voff, the terminal is deactivated at step S406, e.g. shut-down or put in standby mode.

If the operational voltage condition is fulfilled, i.e. Vin is greater than Voff, the terminal is kept active and the execution of the start-up flowchart 400 ends. Note that due to the hysteresis effect, it is not required to have Vin greater than or equal to Von to maintain the device active, but it is enough for Vin to be greater than Voff.

**Figures 7a, 7b** and **7c** represent different exemplary implementations (arrangements) of the powered device 200. For all these arrangements, it is assumed that the powered device is connected to a Power-over-Coax (PoC) network.

**Figure 7a** represents a native PoC powered device. The device embeds the controller and terminal modules, and has a network interface that is PoC compatible.

**Figure 7b** represents an arrangement in which the terminal is embedded in Power-over-Ethernet (PoE) device 701, while the controller is embedded in a PoE/PoC adapter 702. The adapter 702 communicates with the PoE device 701 by means of an Ethernet protocol over an Ethernet cable and is connected to the network via a PoC interface. The PoE/PoC adapter role is to adapt between the formats PoE and PoC. On the PoE side, the PoE/PoC adapter implements the PoE protocol for enabling powering of the terminal. Both the PoE device 701 and the PoE/PoC adapter 702 form the powered device 200.

**Figure 7c** represents an arrangement variant to **Figure 7b** in which the controller is embedded in the PoE device, instead of the adapter.

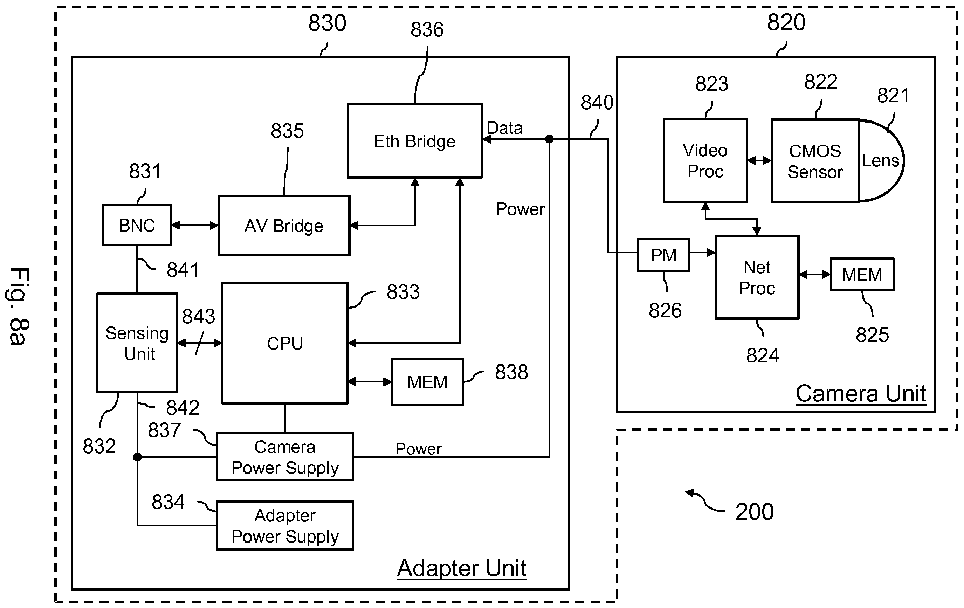

**Figure 8a** is a functional block diagram illustrating an implementation example of a powered device 200. In the illustration, the terminal is considered to be a camera unit. Other functional units may of course be considered.

The device 200 comprises a PoE camera unit 820 (or "network camera") and an adapter unit 830 coupled by a cable 840, the cable 840 being for example an Ethernet link with Power over Ethernet capability for both data and power transmission.

The camera unit 820 comprises a lens 821, a sensor 822 (for example, a CMOS sensor), a video processor 823, a network processor 824, at least one memory 825 (a non-volatile memory, a read-access-memory RAM, a Flash memory, etc.), and a power module PM 826 powering the camera unit 820 via the cable 840. The camera unit 820 thus provides the core device functions of image capture (optics), image processing and memory, and may thus be considered as the "functional unit" of the device 200.

The adapter unit 830 comprises a connector 831, a sensing unit 832, a processor 833 ("Central Processing Unit" or CPU), an adapter power supply module (subsystem DC/DC converter) 834, a camera power supply module 837, an audio/video AV bridge 835, an Ethernet bridge 836, and at least one memory 838.

The connector 831, for example a BNC port, couples the device 200 to the PSE 120 (by means of the cable segment 130), allows the IP communications such as HomePlug AV packets over coax cable, and provides power to the device 200.

The sensing unit 832 is coupled on input to the connector 831 by means of a wire 841, receiving power thereby, and is coupled on output to the adapter power supply 834 and to the camera power supply 837 by means of a wire 842, supplying these latter with power. The sensing unit 832 is further coupled to the processor 833 by means of one or more wires 843 for the exchange of data and/or commands.

The sensing unit 832 implements a circuit for measuring physical quantities such as the voltage at the connector 831. The sensing unit 832 is configured to exchange data/commands with the processor 833, e.g. receiving commands from the processor and providing the result of measurements to the processor by means of the wire(s) 843. This allows the processor to calculate parameters such as the cable resistance, as will be described in further detail with reference to **Figures 8b** and **9.**

The adapter power supply 834 powers the adapter unit 830, in particular a communication subsystem comprising the processor 833, the audio/video bridge 835, the Ethernet bridge 836, and the memory 838 (power connections not shown). The camera power supply 837 powers the camera unit 820 (more specifically, the power module PM 826) via the cable 840.

The AV bridge 835 ("Home Plug AV Bridge") encapsulates core camera IP traffic into HomePlug AV packets and sends them on the coax cable through the connector 831, and extracts IP traffic from received HomePlug AV packets and forwards this IP traffic to the camera unit 820. The Ethernet bridge 836 is coupled to the camera unit 820, the processor 833, and the AV bridge 835, receiving IP traffic from each and combining the IP traffic. The processor 833 is capable of exchanging messages with other devices (e.g. cameras) of the same power segment and with the local camera unit 820 via the Ethernet bridge 836.

**Figure 8a** illustrates a powered device according to the arrangement of **Figure 7b** where the PoE device 701 corresponds to the camera unit 820 and the PoE/PoC adapter 702 to the adapter unit 830. According to this arrangement, the controller is preferably implemented in the adapter unit 830, which means that the flowcharts of **Figures 4** and **5a** - **5e** are executed by the processor 833 of the adapter unit. In other variants, the controller executing embodiments of the invention may be implemented by an ASIC or a dedicated processor either in the adapter unit (e.g. arrangement of **Figure 7b**) or in the powered device (e.g. arrangements of **Figures 7a** and **7c**).

Note that even if the controller is not implemented in the adapter unit (e.g. case of arrangement of **Figure 7c**), it is still preferable to have the sensing unit implemented within the adapter unit to perform direct measurements of the voltage at the input of the powered device. Dedicated means are then established to allow exchange of data/commands between the controller and the sensing unit.

**Figure 8b** illustrates a functional block diagram of the sensing unit 832 shown in **Figure 8a,** configured to implement a cable resistance calculation method.

The basis of the method is to measure the input voltage Vin and to use the measured value by a computing algorithm to calculate the resistance of the cable of the network segment to which the device 200 is connected.

As previously stated in relation with **Figure 8a,** the sensing unit 832 comprises a wire 841 coupling it to the connector 831 on input and a wire 842 coupling it to the adapter power supply 834 and to the camera power supply 837, as well as lines 843 coupling it to the processor 833.

The sensing unit 832 comprises a first resistance $R_1$ 851, a second resistance $R_2$ 854, a switch 852 (such as a transistor) and an analog to digital converter 853. The first resistance 851 and the second resistance 854 are mounted in parallel to the power source originating from the connector 831. The value of $R_1$ is for example 1 KΩ and the value of $R_2$ is for example 100 KΩ. The power consumption of the second resistance $R_2$ is considered negligible compared to both the power consumption of the first resistance 851 and power supply capability. The first resistance 851 is thus used to modify the operating condition of the device 200 by increasing its power consumption.

The first resistance 851 and the switch 852 are in series between a node A and a node B of the circuit. The switch 852 is controlled by a control signal CS provided by processor 833 (represented in dotted lines). Activation of the switch 852 causes it to close, coupling the resistance 851 between the nodes A and B. Deactivation of the switch 852 causes it to open, de-coupling the resistance 851 from the nodes A and B. The converter 853 measures a voltage value Vab between the nodes A and B, and supplies a measured voltage value to the processor 833. Alternatively, the converter 853 may be integrated within the processor 833 and coupled by wires to the nodes.

**Figure 9** is a flowchart of a method 900 of predicting a voltage drop that would occur as a result of activating the terminal and drawing power from the network; i.e. while the camera unit 820 is not yet powered-up/activated. This corresponds to an implementation example of step S403 of **Figure 4.**

The method is for example executed by processor 833 **(Figure 8a)** of the adapter unit 830 and uses the sensing unit 832 described in **Figure 8b.**

The prediction is determined on the basis that the camera unit 820 when activated consumes power according to a given power class Pc.

At step S901, the processor 833 opens the switch 852. It may be noted that as the default state of the switch 852 is "open", execution of this step is optional.

At step S902, the processor 833 reads the output of the ADC 853 and receives a numerical voltage value V1 representing the voltage at the output of the sensing unit when the first resistance 851 is not connected. Note that the camera unit 820 is not activated and thus no current is consumed by the camera unit.

Once the numerical voltage value V1 has been received, the processor 833 closes the switch 852 at a step S903 and reads the output V2 of the ADC 853 at a step S904. The numerical voltage value V2 represents the voltage at the output of the sensing unit when the first resistance 851 is connected.

At step S905, and optionally, the processor 833 re-opens the switch 852 to set it in a default state.

The processor 833 then calculates at step S906 the resistance Rc of cable 103 by applying the following formula:

$$Rc = \frac{V1 - V2}{\delta Ic - \left(\frac{V2}{R1}\right)}$$

where $\delta Ic = \left(\frac{Pa}{V2}\right) - \left(\frac{Pa}{V1}\right)$ and Pa the power consumption of the adapter unit 830.

Next, at step S907 the processor 833 calculates a prediction of the power drop that would occur if the camera unit 820 (terminal) is started up. First, the predicted voltage Vp at the input the of the powered device is determined based on the predicted current Ip:

$$I_p = \frac{-V_{dd} - \sqrt{(V_{dd}^2 - 4Rc\,(Pc+Pa))}}{2*Rc}$$

$$V_p = \frac{(Pc + Pa)}{I_p}$$

where Pc is the power class of the camera unit representing the predicted consumption of the camera unit and Vdd is the nominal voltage output of the PSE 120, such as 56 V.

The voltage drop represents thus the difference Vin - Vp.

At step S908, the processor 833 determines whether the predicted voltage drop is bearable. This for example may be determined simply by checking if Vp ≥ Von.

If the voltage drop is bearable (e.g. Vp ≥ Von), then the terminal activation step S404 is executed, otherwise step S401 is executed or step S403 is re-executed (immediately or after some delay). In one implementation, if the voltage drop is not bearable after a certain number of retries, the processor 833 may notify through a user interface, e.g. a LED, that the camera unit 820 cannot be activated.

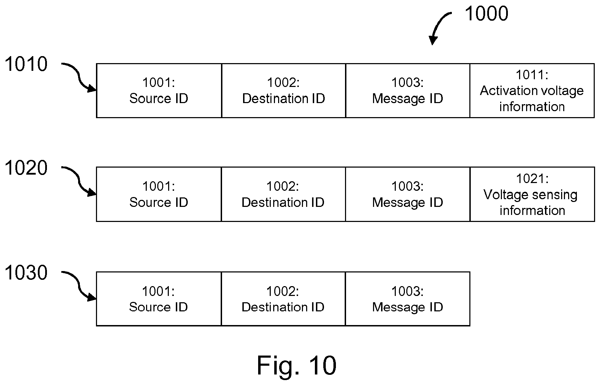

**Figure 10** illustrates messages that may be exchanged within a powered device, according to an embodiment. In particular, the figure illustrates a group 1000 of messages 1010, 1020, 1030 exchanged between the terminal 210 and the controller 220 **(Figure 2)**. The controller has thus the ability to manage the execution of the flowchart of **Figure 4** whenever required by the arrangement of the powered device.

In the embodiment shown in **Figure 10,** the messages 1010, 1020 and 1030 all comprise a source identification 1001, a destination identification 1002, and a message identification 1003.

The source identification 1001 identifies the entity emitting the message, such as the MAC or IP address of the terminal or of the unit embedding the controller (such as the adapter unit).

The destination identifier 1002 identifies the entity targeted by the message, such as the MAC or IP address of the terminal or of the unit embedding the controller (such as the adapter unit).

The message identifier 1003 uniquely identifies the message.

It may be noted that in various embodiments of the invention, the source ID 1001 or destination ID 1002 may not be used.

Message 1010 is an activation voltage configuration message used by the terminal (source) to configure the activation voltage related parameters for the controller (destination). Activation voltage information 1011 is thus appended to the message 1010 and includes an activation voltage threshold value, to be used as the threshold Von by the controller. The activation voltage information 1011 may also include activation timing information. Activation voltage information 1011 may also include one or more time interval voltage thresholds, in relation with **Figure 6.**

Message 1020 is a voltage sensing report message used by the device embedding the sensing unit (source) to provide the controller (destination) with the measured voltage Vin on the cable at the input 230. Voltage sensing information 1021 is thus appended to the message 1020, and may provide either the measured voltage Vin or indicate a voltage failure status.

Message 1030 is a voltage sensing request message used by the controller (source) to request that the device embedding the sensing unit (destination) measures the voltage Vin.

**Claims**

1. A method for controlling activation of a terminal (210) in a powered device (110, 200) connected to a power source equipment (120) in a power over cable system, the method being carried out in the powered device and comprising:

   determining (S401) whether a voltage condition enabling the terminal to be activated is fulfilled, wherein determining whether the voltage condition is fulfilled comprises:

   measuring the input voltage at the terminal; and
   comparing the measured voltage with a voltage activation threshold;
   wherein the voltage condition is fulfilled if the measured voltage is greater or equal to the voltage activation threshold; and

   when the voltage condition is fulfilled, the method is **characterized by** further comprising:

   setting (S501a, S501b, S501c, S501d, S501e) a time delay for activating the terminal,
   checking (S403) whether the voltage condition would still be fulfilled once the terminal is started-up, and
   when the condition would still be fulfilled, activating (S404) the terminal after the time delay has elapsed.

2. The method according to claim 1, wherein the time delay is set to a random time value.

3. The method according to claim 1, wherein the time delay is set based on an input voltage at the terminal.

4. The method according to claim 1, wherein the time delay is set based on a previous activation status of the terminal.

5. The method according to claim 1, further comprising, after activating the terminal, checking (S405) whether an operational voltage condition is fulfilled or not.

6. A computer program product comprising instructions which, when the program is executed by a computer, cause the computer to carry out the steps of the method according to any one of Claims 1 to 5.

7. A controller (221) for controlling activation of a terminal (210) , said controller being included into a powered device (110, 200) comprising the terminal and being connected to a power source equipment (120) in a power over cable system, the controller being configured for carrying out the steps of:

   determining whether a voltage condition enabling the terminal to be activated is fulfilled, wherein determining whether the voltage condition is fulfilled comprises:

   measuring the input voltage at the terminal; and
   comparing the measured voltage with a voltage activation threshold;
   wherein the voltage condition is fulfilled if the measured voltage is greater or equal to the voltage activation threshold; and

   when the voltage condition is fulfilled, the controller is further configured for carrying out the steps of:

   setting a time delay for activating the terminal,
   checking whether the voltage condition would still be fulfilled once the terminal is started-up, and
   when the condition would still be fulfilled, activating the terminal after the time delay has elapsed.

8. The controller according to claim 7, wherein the time delay is set to a random time value, is set based on an input voltage at the terminal, or is set based on a previous activation status of the terminal.

9. A powered device (110, 200) comprising a terminal (210) and a controller (221) according to any one of claims 7 to 8.

10. The powered device according to claim 9, the powered device comprising an interface of the power over coax type.

11. The powered device according to claim 10, wherein the terminal is embedded within a power over Ethernet device and the controller is embedded within a power over Ethernet - power over coax adapter.

12. The powered device according to claim 10, wherein the terminal and the controller are embedded within a power over Ethernet device, the powered device further comprising a power over Ethernet - power over coax adapter.

**Patentansprüche**

1. Ein Verfahren zur Steuerung der Aktivierung eines Anschlusses (210) in einer mit Strom versorgten Vorrichtung (110, 200), die mit einer Stromquellenausrüstung (120) in einem Stromversorgung-über-Kabel-System verbunden ist, wobei das Verfahren in der mit Strom versorgten Vorrichtung ausgeführt wird und folgendes aufweist:

   Bestimmen (S401), ob eine Spannungsbedingung, die eine Aktivierung des Anschlusses ermöglicht, erfüllt ist, wobei das Bestimmen, ob die Spannungsbedingung erfüllt ist folgendes aufweist:

   Messen der Eingangsspannung an dem Anschluss; und
   Vergleichen der gemessenen Spannung mit einem Spannungsaktivierungsgrenzwert;
   wobei die Spannungsbedingung erfüllt ist, wenn die gemessene Spannung größer oder gleich dem Spannungsaktivierungsgrenzwert ist; und

   wenn die Spannungsbedingung erfüllt ist, ist das Verfahren **dadurch gekennzeichnet, dass** es weiterhin aufweist:

   Einstellen (S501a, S501b, S501c, S501d, S501e) einer Zeitverzögerung zum Aktivieren des Anschlusses,
   Prüfen (S403), ob die Spannungsbedingung noch erfüllt wäre, sobald der Anschluss hochgefahren ist, und
   wenn die Bedingung noch erfüllt wäre, Aktivieren des Anschlusses nach Ablauf der Zeitverzögerung (S404).

2. Das Verfahren nach Anspruch 1, wobei die Zeitverzögerung auf einen zufälligen Zeitwert eingestellt wird.

3. Das Verfahren nach Anspruch 1, wobei die Zeitverzögerung auf der Grundlage einer Eingangsspannung an dem Anschluss eingestellt wird.

4. Das Verfahren nach Anspruch 1, wobei die Zeitverzögerung auf der Grundlage eines vorherigen Aktivierungsstatus des Anschlusses eingestellt wird.

5. Das Verfahren nach Anspruch 1, das ferner aufweist, nach der Aktivierung des Anschlusses zu prüfen (S405), ob eine Betriebsspannungsbedingung erfüllt ist oder nicht.

6. Ein Computerprogrammprodukt mit Anweisungen, die bei Ausführung des Programms von einem Computer den Computer dazu veranlassen, die Schritte des Verfahrens nach einem der Ansprüche 1 bis 5 auszuführen.

7. Eine Steuereinheit (221) zur Steuerung der Aktivierung eines Anschlusses (210), wobei die Steuereinheit Teil einer mit Strom versorgten Vorrichtung (110, 200) ist, die den Anschluss aufweist und mit einer Stromquelleneinrichtung (120) in einem Stromversorgung-über-Kabel-System verbunden ist, wobei die Steuereinheit eingerichtet ist, um die folgenden Schritte auszuführen:

   Bestimmen, ob eine Spannungsbedingung, die die Aktivierung des Anschlusses ermöglicht, erfüllt ist, wobei Bestimmen, ob die Spannungsbedingung erfüllt ist folgendes aufweist:

      Messen der Eingangsspannung an dem Anschluss; und
      Vergleichen der gemessenen Spannung mit einem Spannungsaktivierungsgrenzwert;
      wobei die Spannungsbedingung erfüllt ist, wenn die gemessene Spannung größer oder gleich dem Spannungsaktivierungsgrenzwert ist; und

   wenn die Spannungsbedingung erfüllt ist, die Steuereinheit ferner zum Ausführen der folgenden Schritte eingerichtet ist:

      Einstellen einer Zeitverzögerung für die Aktivierung des Anschlusses, Prüfen, ob die Spannungsbedingung immer noch erfüllt wäre, sobald der Anschluss in hochgefahren ist, und
      wenn die Bedingung noch erfüllt sobald, den Anschluss nach Ablauf der Zeitverzögerung zu aktivieren.

8. Die Steuereinheit nach Anspruch 7, wobei die Zeitverzögerung auf einen zufälligen Zeitwert eingestellt wird, auf der Grundlage einer Eingangsspannung am Anschluss eingestellt wird oder auf der Grundlage eines vorherigen Aktivierungsstatus des Anschlusses eingestellt wird.

9. Eine mit Strom versorgte Vorrichtung (110, 200) mit einem Anschluss (210) und einer Steuereinheit (221) nach einem der Ansprüche 7 oder 8.

10. Die mit Strom versorgte Vorrichtung nach Anspruch 9, wobei die mit Strom versorgte Vorrichtung eine Schnittstelle vom Typ Stromversorgung-über-Coax aufweist.

11. Die mit Strom versorgte Vorrichtung nach Anspruch 10, wobei der Anschluss in einer Stromversorgung-über-Ethernet Vorrichtung eingebettet ist und die Steuereinheit in einem Stromversorgung-über-Ethernet - Stromversorgung-über-Coax - Adapter eingebettet ist.

12. Die mit Strom versorgte Vorrichtung nach Anspruch 10, wobei der Anschluss und die Steuereinheit in einer Stromversorgung-über-Ethernet-Vorrichtung eingebettet sind, wobei die mit Strom versorgte Vorrichtung ferner einen Stromversorgung-über-Ethernet - Stromversorgung-über-Coax - Adapter aufweist.

## Revendications

1. Procédé destiné à commander l'activation d'un terminal (210) dans un dispositif électrique (110, 200) relié à un équipement de source d'alimentation électrique (120) dans un système d'alimentation électrique par câble, le procédé étant mis en œuvre dans le dispositif électrique et comprenant :

   la détermination (S401) de si une condition de tension permettant au terminal d'être activé est remplie, dans lequel la détermination de si la condition de tension est remplie comprend :

      la mesure de la tension d'entrée au niveau du terminal ; et
      la comparaison de la tension mesurée avec un seuil d'activation de tension ;
      dans lequel la condition de tension est remplie si la tension mesurée est supérieure ou égale au seuil d'activation de tension ; et

   lorsque la condition de tension est remplie, le procédé est **caractérisé en ce qu'**il comprend en outre :

      le réglage (S501a, S501b, S501c, S501d, S501e) d'un délai temporel pour activer le terminal,
      la vérification (S403) de si la condition de tension serait toujours remplie dès lors que le terminal a été mis en service, et
      lorsque la condition serait toujours remplie, l'activation (S404) du terminal après que le délai temporel s'est écoulé.

2. Procédé selon la revendication 1, dans lequel le délai temporel est réglé sur une valeur temporelle aléatoire.

3. Procédé selon la revendication 1, dans lequel le délai temporel est réglé sur la base d'une tension d'entrée au niveau du terminal.

4. Procédé selon la revendication 1, dans lequel le délai temporel est réglé sur la base d'un état d'activation précédent du terminal.

5. Procédé selon la revendication 1, comprenant en outre, après activation du terminal, la vérification (S405) de si une condition de tension opérationnelle est remplie ou non.

6. Produit de programme informatique comprenant des instructions qui, lorsque le programme est exécuté par un ordinateur, amènent l'ordinateur à mettre en œuvre les étapes du procédé selon l'une quelconque des revendications 1 à 5.

7. Dispositif de commande (221) destiné à commander l'activation d'un terminal (210), ledit dispositif de commande étant inclus dans un dispositif électrique (110, 200) comprenant le terminal et étant relié à un équipement de source d'alimentation électrique (120) dans un système d'alimentation électrique par câble, le dispositif de commande étant configuré pour mettre en œuvre les étapes de :

   détermination (S401) de si une condition de tension permettant au terminal d'être activé est remplie, dans lequel la détermination de si la condition de tension est remplie comprend :

   la mesure de la tension d'entrée au niveau du terminal ; et
   la comparaison de la tension mesurée avec un seuil d'activation de tension ;
   dans lequel la condition de tension est remplie si la tension mesurée est supérieure ou égale au seuil d'activation de tension ; et

   lorsque la condition de tension est remplie, le dispositif de commande est en outre configuré pour mettre en œuvre les étapes de :

   réglage d'un délai temporel pour activer le terminal,
   vérification de si la condition de tension serait toujours remplie dès lors que le terminal a été mis en service, et
   lorsque la condition serait toujours remplie, activation du terminal après que le délai temporel s'est écoulé.

8. Dispositif de commande selon la revendication 7, dans lequel le délai temporel est réglé sur une valeur temporelle aléatoire, est réglé sur la base d'une tension d'entrée au niveau du terminal ou est réglé sur la base d'un état d'activation précédent du terminal.

9. Dispositif électrique (110, 200) comprenant un terminal (210) et un dispositif de commande (221) selon l'une quelconque des revendications 7 à 8.

10. Dispositif électrique selon la revendication 9, le dispositif électrique comprenant une interface du type alimentation électrique par câble coaxial.

11. Dispositif électrique selon la revendication 10, dans lequel le terminal est intégré à l'intérieur d'un dispositif d'alimentation électrique par Ethernet et le dispositif de commande est intégré à l'intérieur d'un adaptateur d'alimentation électrique par Ethernet - alimentation électrique par câble coaxial.

12. Dispositif électrique selon la revendication 10, dans lequel le terminal et le dispositif de commande sont intégrés à l'intérieur d'un dispositif d'alimentation électrique par Ethernet, le dispositif électrique comprenant en outre un adaptateur d'alimentation électrique par Ethernet - alimentation électrique par câble coaxial.

Fig. 1

Fig. 2

Fig. 3

400

Start

S401 — Start-up voltage condition fulfilled? — No →

Yes ↓

S402 — Start-up time control

S403 — Predict if voltage condition is still fulfilled after start-up? — No →

Yes ↓

S404 — Terminal start-up

S406 — Terminal deactivated

S405 — Operational voltage Condition fulfilled? — No →

Yes ↓

Finish

Fig. 4

S401

S501a — Set a random time period

S502 — Wait expiry of the time period

S403

Fig. 5a

S401

S501b — Set a time period based on measured voltage

S502 — Wait expiry of the time period

S403

Fig. 5b

## Fig. 5c

S401

S501c — Set a time period based on previous status

S502 — Wait expiry of the time period

S403

## Fig. 5d

S401

S507 Yes

S403 ← status='operational'

No

S508 No

S403 ← Vin ≥ Vth

Yes

S501e — Set a time period

S502 — Wait expiry of the time period

S401

## Fig. 5e

S401

S503 — n = N

S504 Yes

S403 ← Vn-1 < Vin ≤ Vn?

No

S501d — Set a time period

S502 — Wait expiry of the time period

S505 — n = n - 1

S506 — n < 1?

S401 ← Yes

No

## Fig. 6

Vs

$V_N$ = Vmax -----------

$V_{n-1}$ -----------

... -----------

$V_1$ -----------

$V_0$ = Von -----------

0

200

**Fig. 7a**

200

**Fig. 7b**

200

**Fig. 7c**

Fig. 8a

Fig. 8b

Fig. 9

1000

1010

| 1001:<br>Source ID | 1002:<br>Destination ID | 1003:<br>Message ID | 1011:<br>Activation voltage<br>information |
|---|---|---|---|

1020

| 1001:<br>Source ID | 1002:<br>Destination ID | 1003:<br>Message ID | 1021:<br>Voltage sensing<br>information |
|---|---|---|---|

1030

| 1001:<br>Source ID | 1002:<br>Destination ID | 1003:<br>Message ID |
|---|---|---|

Fig. 10

**EP 3 588 845 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015042243 A
- AU 2014202838